# FASCICULE DE BREVET EUROPEEN

(11) **EP 2 219 909 B1**
(45) Date de publication et mention de la délivrance du brevet: **11.05.2011**
(21) Numéro de dépôt: 08853202.3
(22) Date de dépôt: 13.11.2008
(51) Int. Cl.: B60S 1/48, B60S 1/50

(54) **RESERVOIR DE LIQUIDE DE LAVAGE POUR VEHICULE AUTOMOBILE**
WASCHFLÜSSIGKEITSBEHÄLTER FÜR EIN KRAFTFAHRZEUG
WASHING LIQUID TANK FOR MOTOR VEHICLE

(30) Priorité: 16.11.2007 FR 0708068
(43) Date de publication de la demande: 25.08.2010
(73) Titulaire: Tristone Flowtech Solutions (TFS), 44470 Carquefou (FR); Peugeot Citroën Automobiles SA, 78140 Vélizy Villacoublay (FR)
(72) Inventeur: MEROUR, Sylvain, F-44120 Vertou (FR)
(74) Mandataire: Godineau, Valérie
(86) Numéro de dépôt international: PCT/FR2008/052039
(87) Numéro de publication internationale: WO 2009/068817

(56) Documents cités:
- EP-A- 0 213 414
- WO-A2-2009/016297
- DE-A1- 10 138 466
- FR-A- 2 884 477

## Description

La présente invention concerne de manière générale les réservoirs de liquide de lavage pour véhicule automobile.

L'invention concerne plus particulièrement un réservoir de liquide de lavage, en particulier des vitres ou des projecteurs, pour véhicule automobile, le réservoir étant pourvu d'au moins une cloison séparant, au moins partiellement, une première chambre, dite froide, comportant dans sa partie supérieure au moins un orifice de remplissage du liquide, et une deuxième chambre, dite chaude, comportant dans sa partie inférieure au moins un orifice de pompage, cette deuxième chambre présentant une cloison commune à un corps de réchauffage, tel qu'une chambre de dégazage, de manière à assurer le réchauffage du liquide contenu dans ladite deuxième chambre, cette deuxième chambre communiquant avec ladite première chambre par au moins un orifice de communication ménagé dans ladite cloison séparative afin de permettre le remplissage de ladite deuxième chambre à partir de ladite première chambre.

Ce type de reservoir est décrit par le document FR 2 884 477A.

De manière classique, la projection du liquide de lavage sur le pare-brise ou les projecteurs du véhicule est assurée par un ou plusieurs organes de pulvérisation, du type gicleur, alimentés en liquide de lavage par une pompe d'alimentation depuis un réservoir contenant le liquide de lavage. Le liquide de lavage est habituellement composé d'un mélange d'eau et d'alcool en proportion élevée. En dépit de la présence d'alcool, la qualité de lavage reste médiocre.

Pour améliorer la qualité de lavage, il est connu de réchauffer le liquide de lavage. Le réchauffage du liquide de lavage permet également de diminuer la proportion d'alcool dans le mélange et, ainsi, de contribuer à la préservation de l'environnement.

Une solution consiste à prélever les calories nécessaires à l'élévation de la température du liquide de lavage contenu dans le réservoir du véhicule, logé dans le compartiment moteur de ce véhicule, à partir de la boîte de dégazage ou vase d'expansion de son circuit de refroidissement. Le réservoir et la boîte de dégazage comportent alors une cloison commune permettant le transfert de chaleur de la boîte de dégazage vers le réservoir. Mais dans ce cas, la température propre de la boîte de dégazage risque de subir des variations brusques, avec les risques pouvant en découler sur le bon fonctionnement du moteur. En outre, le temps nécessaire au réchauffement du liquide de lavage contenu dans la chambre comportant le liquide de lavage est long.

Pour résoudre ce problème de chauffage du liquide de lavage, il est connu de diviser le réservoir en au moins deux chambres. L'une des chambres, dite chambre chaude, est en contact par une de ses cloisons avec la boîte de dégazage et comporte dans sa partie inférieure un orifice de pompage. L'autre chambre, dite chambre froide, généralement de plus grand volume que la chambre chaude, est isolée thermiquement de la boîte de dégazage et est conçue de manière à alimenter en liquide de lavage la chambre chaude. La cloison de la chambre chaude, de volume réduit, en contact avec la chambre de dégazage présente une surface suffisante pour assurer une élévation de température rapide et un maintien de ladite température à l'intérieur de la chambre chaude. En outre, le volume réduit de la chambre chaude permet d'éviter une baisse brutale de la température dans la boîte de dégazage.

Cependant, on observe généralement un gradient de température de l'ordre de 30°C entre la température du liquide en partie haute de la chambre chaude et la température du liquide en partie basse de ladite chambre chaude. Ainsi, le liquide qui est situé, en partie basse, à proximité de l'orifice de pompage est de plus faible température. Il en résulte que, lors de la phase de pompage de liquide, le liquide évacué par l'orifice de pompage est peu réchauffé, ce qui ne permet pas d'obtenir un lavage optimal des vitres et des projecteurs.

Un but de la présente invention est de proposer un réservoir de liquide de lavage du type précité dont la conception permet d'évacuer par l'orifice de pompage un liquide de température plus élevée.

A cet effet, l'invention concerne un réservoir de liquide de lavage, en particulier des vitres ou des projecteurs, pour véhicule automobile, le réservoir étant pourvu d'au moins une cloison séparant, au moins partiellement, une première chambre, dite froide, comportant dans sa partie supérieure au moins un orifice de remplissage du liquide, et une deuxième chambre, dite chaude, comportant dans sa partie inférieure au moins un orifice de pompage, cette deuxième chambre présentant une cloison commune à un corps de réchauffage, tel qu'une chambre de dégazage, de manière à assurer le réchauffage du liquide contenu dans ladite deuxième chambre, cette deuxième chambre communiquant avec ladite première chambre par au moins un orifice de communication ménagé dans ladite cloison séparative afin de permettre le remplissage de ladite deuxième chambre à partir de ladite première chambre, caractérisé en ce que l'orifice de pompage de la deuxième chambre se prolonge en direction de l'intérieur de la deuxième chambre par une colonne d'évacuation du contenu de ladite deuxième chambre, ladite colonne étant alimentée en liquide par l'intermédiaire d'au moins une ouverture, dite ouverture haute, éloignée de la base de la colonne.

Grâce à la colonne d'évacuation, l'orifice de pompage est alimenté en liquide chaud provenant d'une partie haute de la chambre chaude. La température du liquide évacué par l'orifice de pompage est ainsi supérieure à celle obtenue avec un réservoir de l'état de la technique dépourvu de colonne d'évacuation. Le lavage des vitres ou des projecteurs est ainsi plus efficace.

Selon une premier mode de réalisation de l'invention, la colonne d'évacuation comporte une ouverture supplémentaire d'alimentation en liquide de ladite colonne d'évacuation, dite ouverture basse, ladite ouverture basse étant située à un niveau inférieur de ladite ouverture haute et, de préférence à, ou au voisinage de, la base de ladite colonne.

L'ouverture supplémentaire d'alimentation en liquide de ladite colonne d'évacuation permet d'alimenter l'orifice de pompage avec du liquide provenant de la partie basse, de plus faible température, de la deuxième chambre. Le liquide évacué est ainsi formé par un mélange de liquide provenant de la partie haute, de plus haute température, et de liquide provenant de la partie basse, de plus faible température, de la deuxième chambre. La température du liquide évacué par l'orifice de pompage est donc supérieure à celle obtenue avec un réservoir de l'état de la technique sans colonne et le liquide présent dans la deuxième chambre conserve une température suffisamment élevée. Ainsi, l'orifice de pompage peut fournir, pour une période de temps donnée, une plus grande quantité de liquide à température suffisamment élevée pour obtenir un lavage efficace.

Selon une caractéristique avantageuse du premier mode de réalisation de l'invention, l'ouverture supplémentaire d'alimentation est située sur la colonne à l'opposé de l'orifice de communication par rapport à l'orifice de pompage.

La disposition de l'ouverture supplémentaire d'alimentation à l'opposé de l'orifice de communication permet de faire circuler le liquide de faible température entrant par l'orifice de communication autour de ladite colonne.

Grâce à cette circulation dans la deuxième chambre, le liquide a le temps d'être réchauffé. La température du liquide évacué par l'orifice de pompage est ainsi plus élevée.

Selon un deuxième mode de réalisation de l'invention, qui peut être ou non combiné avec le premier mode de réalisation, la deuxième chambre est équipée de moyens de déflection du liquide issu de l'orifice de communication, disposés entre ledit orifice de communication et l'ouverture supplémentaire d'alimentation.

La déflection du liquide issu de l'orifice de communication permet également d'accroître le temps de circulation du liquide de faible température entrant par l'orifice de communication dans la deuxième chambre. De tels moyens de déflection favorisent donc l'élévation de température du liquide évacué.

Selon une autre caractéristique avantageuse de l'invention, le réservoir est formé par assemblage d'au moins deux pièces moulées, la colonne étant venue de moulage avec la pièce comportant l'orifice de pompage.

Selon une autre caractéristique avantageuse de l'invention, ladite ouverture haute est ménagée à, ou au voisinage, du sommet de la colonne.

Selon une autre caractéristique avantageuse de l'invention, le réservoir est formé par assemblage d'au moins deux pièces moulées, la colonne étant formée de deux parties à raccorder, l'une des parties de la colonne venant de moulage avec la pièce comportant l'orifice de pompage et l'autre partie venant de moulage avec l'autre pièce, ladite ouverture haute de la colonne étant ménagée dans la zone de raccordement des deux parties formant la colonne.

Selon une autre caractéristique avantageuse de l'invention, le corps de réchauffage est une boîte de dégazage intégrée au réservoir, ladite boîte de dégazage étant formée d'une ou plusieurs parties venues de moulage avec les parties constitutives du réservoir.

Selon une autre caractéristique avantageuse de l'invention, le diamètre de la colonne d'évacuation est égal ou supérieur au diamètre de l'orifice de pompage et la hauteur de ladite colonne d'évacuation est de préférence comprise entre 15 et 80 mm.

Selon une autre caractéristique avantageuse de l'invention, le diamètre de la colonne d'évacuation est compris entre 15 et 30 mm.

L'invention sera bien comprise à la lecture de la description suivante d'exemples de réalisation, en référence aux dessins annexés dans lesquels :
- la figure 1 est une vue en coupe du réservoir conforme à l'invention, selon un plan de coupe passant par l'axe de la colonne ;
- la figure 2 est une vue en coupe du réservoir de la figure 1, selon un plan de coupe passant par l'orifice de communication entre les chambres chaude et froide ;
- la figure 3 est une vue en perspective de l'intérieur de la partie inférieure du réservoir.

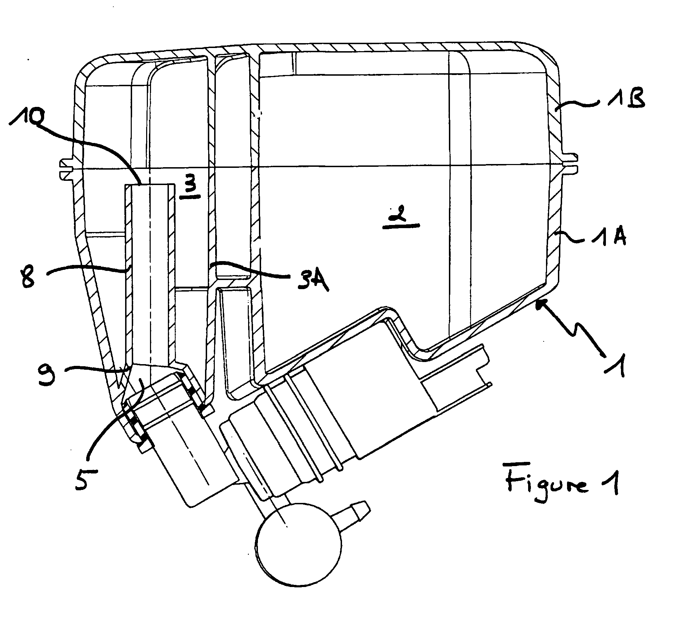

A la figure 1, on a représenté un réservoir 1 de liquide de lavage pour véhicule automobile. Ce liquide de lavage est plus particulièrement destiné à être pulvérisé sur les vitres ou les projecteurs du véhicule.

Le réservoir 1 est pourvu d'au moins une cloison 3A, 3B séparant une première chambre 2, dite froide, comportant dans sa partie supérieure un orifice de remplissage du liquide, et une deuxième chambre 3, dite chaude, comportant dans sa partie inférieure un orifice de pompage 5 par lequel une ou plusieurs pompes alimentent en liquide de lavage des gicleurs lave-vitres ou des gicleurs lave-projecteurs du véhicule.

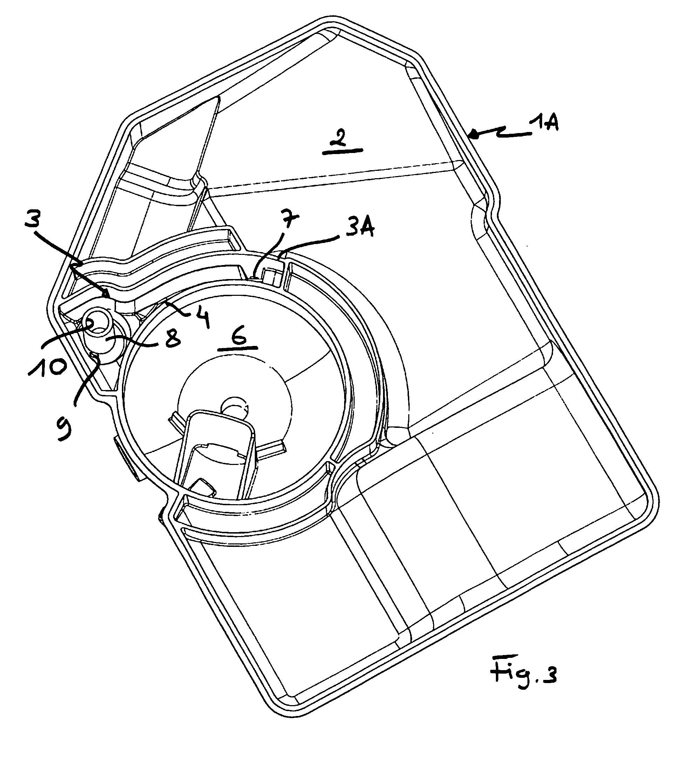

Cette deuxième chambre 3 présente une cloison commune à un corps de réchauffage 6 (voir figure 3), de manière à assurer le réchauffage du liquide contenu dans ladite deuxième chambre 3. Dans l'exemple illustré aux figures, le corps de réchauffage 6 est une boîte de dégazage intégrée au réservoir 1.

La boîte de dégazage 6 fait partie d'un circuit de refroidissement du moteur du véhicule automobile. Cette boîte de dégazage comporte de manière en soi connue, un bouchon amovible pour permettre le remplissage du circuit de refroidissement en liquide approprié à cet usage. Ce liquide est généralement constitué par de l'eau à laquelle est ajouté, en proportion convenable, un additif en lui-même connu dans la technique, propre à réduire la tension superficielle du liquide et à limiter sa vaporisation lors du fonctionnement du moteur.

Cette boîte de dégazage remplie du liquide du circuit surmonté d'une quantité résiduelle de gaz provenant, soit d'une fraction vaporisée du liquide dans le circuit de refroidissement lui-même, soit de la combustion du carburant dans le moteur, soit encore de l'air extérieur emprisonné dans les circuits lors de son remplissage, comporte de façon classique une soupape de sécurité non représentée. Le circuit est muni d'un orifice de trop plein limitant la quantité de liquide enfermé dans celui-ci à l'occasion de sa mise à niveau initiale ou de son ajustement ultérieur. Le volume de ce liquide est évidemment variable d'un véhicule à l'autre mais généralement de l'ordre de 1 à 2 litres.

Le détail du reste du circuit de refroidissement du véhicule automobile, en particulier, de la tubulure de circulation dans la culasse du moteur et de la liaison avec le radiateur n'est pas fourni dans la mesure où il n'apporte pas directement à l'invention.

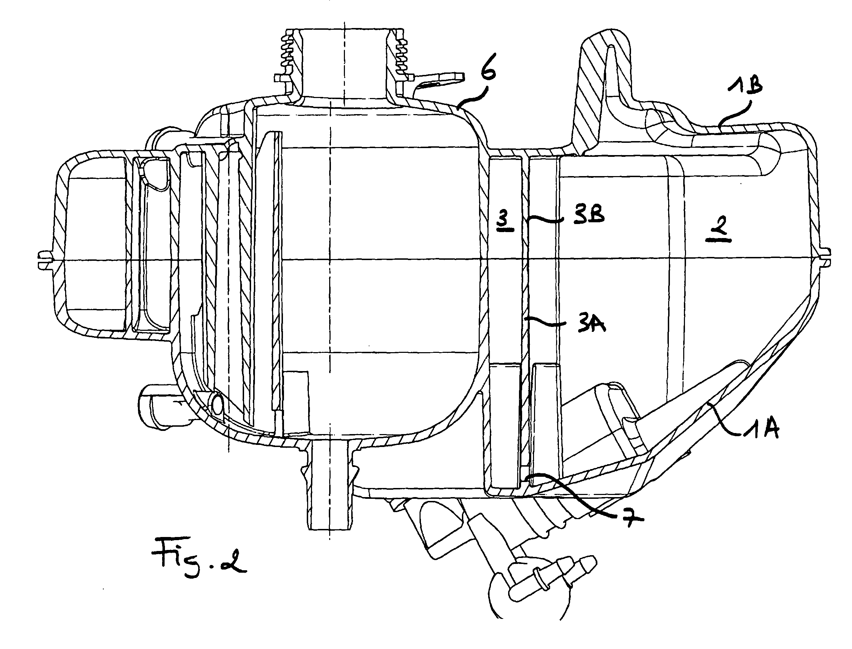

Comme illustré aux figures 2 et 3, la deuxième chambre 3 communique avec ladite première chambre 2 par un orifice de communication 7 ménagé dans ladite cloison 3A, 3B séparative afin de permettre le remplissage de ladite deuxième chambre 3 à partir de ladite première chambre 2. Cet orifice de communication 7 entre lesdites chambres est de préférence calibré pour limiter les échanges thermiques entre lesdites chambres. Cet orifice assure l'alimentation de la deuxième chambre 3 en fluide de lavage non chauffé depuis la première chambre 2. La première chambre 2 constitue ainsi l'équivalent d'une réserve de liquide de lavage non chauffé pour la deuxième chambre 3.

La chambre 2 froide, ou chambre principale, a un volume qui correspond à la majeure partie du réservoir et la chambre 3 chaude, ou, chambre auxiliaire, a un volume beaucoup plus faible comparé à celui de la chambre principale avec laquelle elle est en communication permanente. La faible quantité d'eau de lavage introduite dans la chambre auxiliaire à partir de la chambre principale du réservoir, est ainsi très rapidement amenée, du fait de son volume réduit, à une température plus élevée par suite du contact direct de cette chambre auxiliaire avec la boîte de dégazage, sans perturber le bon fonctionnement du circuit de refroidissement du moteur et en particulier sans occasionner un refroidissement brutal du liquide présent dans celui-ci.

En règle générale, cette disposition des chambres 2 et 3 s'applique dans les meilleures conditions lorsque le volume d'eau de lavage dans le réservoir est compris entre 1 et 8 litres, de préférence entre 3 et 6 litres selon le type de véhicule, le volume de la chambre auxiliaire étant de l'ordre de 20 à 200 cc.

De manière caractéristique à l'invention, l'orifice de pompage 5 se prolonge en direction de l'intérieur de la deuxième chambre 3 par une colonne 8 d'évacuation du contenu de ladite deuxième chambre 3. Ladite colonne 8 est alimentée en liquide par l'intermédiaire d'au moins une ouverture 10, dite ouverture haute, éloignée de la base de la colonne 8.

Le sommet de ladite colonne est positionné dans la partie haute de la deuxième chambre 3 correspondant à la zone la plus chaude de ladite deuxième chambre 3. De préférence, ladite ouverture haute de la colonne 8 est ménagée à, ou au voisinage, du sommet de la colonne 8. Le liquide est aussi prélevé dans la partie haute correspondant à la zone sensiblement la plus chaude de ladite deuxième chambre 3.

Comme illustré à la figure 1, la colonne 8 d'évacuation comporte à sa base, qui entoure l'orifice de pompage 5, une ouverture 9 supplémentaire d'alimentation en liquide de ladite colonne 8 d'évacuation, dite ouverture basse.

La hauteur de ladite colonne 8 d'évacuation est de préférence comprise entre 15 et 80 mm.

Le diamètre de la colonne 8 d'évacuation est de préférence égal ou supérieur au diamètre de l'orifice de pompage 5. Préférentiellement, le diamètre de la colonne 8 d'évacuation est compris entre 15 et 30 mm et le diamètre de l'orifice de pompage 5 compris entre 10 et 20 mm.

Ladite au moins une ouverture 10 d'alimentation en fluide du sommet de la colonne est formée, indifféremment, soit par le sommet ouvert de ladite colonne se présentant sous forme d'un élément tubulaire, soit par une ouverture ménagée dans la paroi de la colonne tubulaire en un emplacement proche du sommet de ladite colonne, soit par une combinaison des solutions précitées.

Le diamètre de l'ouverture 9 supplémentaire de la colonne 8 d'évacuation est calibré en fonction du diamètre de l'orifice de pompage 5 et/ou du diamètre de la colonne 8 d'évacuation de manière à permettre une alimentation de l'orifice de pompage 5 en partie par l'ouverture 9 supplémentaire de la colonne 8 et en partie par l'embouchure 10 de la colonne 8 en partie haute de la chambre chaude 3.

Selon un premier mode de réalisation, l'ouverture 9 supplémentaire d'alimentation est située à l'opposé de l'orifice de communication 7 par rapport à l'orifice de pompage 5. Autrement dit, l'orifice de communication 7 et l'ouverture 9 supplémentaire sont disposés de part et d'autre d'un plan vertical passant par l'orifice de pompage 5 et sensiblement orthogonal au plan d'ouverture dudit orifice.

Selon un deuxième mode de réalisation avantageux de l'invention qui peut être combiné au premier mode de réalisation, la deuxième chambre 3 est équipée de moyens de déflection du liquide issu de l'orifice de communication 7, disposés entre ledit orifice de communication 7 et l'ouverture 9 supplémentaire d'alimentation. Les moyens de déflection imposent audit liquide issu de l'orifice de communication 7 un chemin de circulation à l'intérieur de la deuxième chambre 3, avant passage d'une partie dudit liquide par l'ouverture 9 latérale de la colonne tubulaire.

Comme illustré à la figure 1, le réservoir 1 est formé par assemblage d'au moins deux pièces moulées, une pièce inférieure 1A et une pièce supérieure 1B, la colonne 8 étant venue de moulage avec la pièce inférieure 1A comportant l'orifice de pompage 5. La boîte de dégazage est formée d'une ou de plusieurs parties venues de moulage avec les parties 1A, 1B constitutives du réservoir.

Selon un autre mode de réalisation non illustré, on peut prévoir que le réservoir soit formé par assemblage d'au moins deux pièces moulées, la colonne étant formée de deux parties à raccorder, l'une des parties de la colonne venant de moulage avec la pièce comportant l'orifice de pompage et l'autre partie venant de moulage avec l'autre pièce. Ladite ouverture haute de la colonne est alors ménagée dans la zone de raccordement des deux parties formant la colonne.

La présente invention n'est nullement limitée au mode de réalisation décrit et représenté, mais l'homme du métier saura y apporter toute variante selon la protection définie par les revendications.

## Revendications

1. Réservoir (1) de liquide de lavage, en particulier des vitres ou des projecteurs, pour véhicule automobile, le réservoir (1) étant pourvu d'au moins une cloison (3A, 3B) séparant, au moins partiellement, une première chambre (2), dite froide, comportant dans sa partie supérieure au moins un orifice de remplissage du liquide, et une deuxième chambre (3), dite chaude, comportant dans sa partie inférieure au moins un orifice de pompage (5), cette deuxième chambre (3) présentant une cloison commune à un corps de réchauffage (6), tel qu'une chambre de dégazage (6), de manière à assurer le réchauffage du liquide contenu dans ladite deuxième chambre (3), cette deuxième chambre (3) communiquant avec ladite première chambre (2) par au moins un orifice de communication (7) ménagé dans ladite cloison (3A, 3B) séparative afin de permettre le remplissage de ladite deuxième chambre (3) à partir de ladite première chambre (2),
**caractérisé en ce que** l'orifice de pompage (5) de la deuxième chambre (3) se prolonge en direction de l'intérieur de la deuxième chambre (3) par une colonne (8) d'évacuation du contenu de ladite deuxième chambre (3), ladite colonne (8) étant alimentée en liquide par l'intermédiaire d'au moins une ouverture (10), dite ouverture haute, éloignée de la base de la colonne (8).

2. Réservoir (1) selon la revendication 1, **caractérisé en ce que** la colonne (8) d'évacuation comporte une ouverture (9) supplémentaire d'alimentation en liquide de ladite colonne (8) d'évacuation, dite ouverture basse, ladite ouverture basse étant située à un niveau inférieur de ladite ouverture haute et, de préférence à, ou au voisinage de, la base de ladite colonne (8).

3. Réservoir (1) selon l'une des revendications 1 à 2, **caractérisé en ce que** l'ouverture (9) supplémentaire d'alimentation est située sur la colonne à l'opposé de l'orifice de communication (7) par rapport à l'orifice de pompage (5).

4. Réservoir (1) selon l'une des revendications 1 à 3, **caractérisé en ce que** la deuxième chambre (3) est équipée de moyens de déflection du liquide issu de l'orifice de communication (7), disposés entre ledit orifice de communication (7) et l'ouverture (9) supplémentaire d'alimentation.

5. Réservoir (1) selon l'une des revendications 1 à 4, **caractérisé en ce qu'**il est formé par assemblage d'au moins deux pièces (1A, 1B) moulées, la colonne (8) étant venue de moulage avec la pièce (1A) comportant l'orifice de pompage (5).

6. Réservoir (1) selon l'une des revendications 1 à 5, **caractérisé en ce que** ladite ouverture haute est ménagée à, ou au voisinage, du sommet de la colonne (8).

7. Réservoir (1) selon l'une des revendications 1 à 4, **caractérisé en ce qu'**il est formé par assemblage d'au moins deux pièces (1A, 1B) moulées, la colonne (8) étant formée de deux parties à raccorder, l'une des parties de la colonne (8) venant de moulage avec la pièce (1A) comportant l'orifice de pompage (5) et l'autre partie venant de moulage avec l'autre pièce (1 B), ladite ouverture haute de la colonne (8) étant ménagée dans la zone de raccordement des deux parties formant la colonne (8).

8. Réservoir (1) selon l'une des revendications 1 à 7, du type formé par assemblage d'au moins deux pièces (1A, 1 B) moulées, **caractérisé en ce que** le corps de réchauffage (6) est une boîte de dégazage intégrée au réservoir (1), ladite boîte de dégazage étant formée d'une ou plusieurs parties venues de moulage avec les parties (1A, 1 B) constitutives du réservoir (6).

9. Réservoir (1) selon l'une des revendications 1 à 8, **caractérisé en ce que** le diamètre de la colonne (8) d'évacuation est égal ou supérieur au diamètre de l'orifice de pompage (5) et **en ce que** la hauteur de ladite colonne (8) d'évacuation est de préférence comprise entre 15 et 80 mm.

10. Réservoir (1) selon l'une des revendications 1 à 9, **caractérisé en ce que** le diamètre de la colonne (8) d'évacuation est compris entre 15 et 30 mm.

## Claims

1. A washing liquid tank (1), in particular for windows or headlights, for a motor vehicle, the tank (1) being provided with at least one partition (3A, 3B) at least partly separating a first so-called cold chamber (2), including in its upper portion at least one orifice for filling with the liquid, and a second so-called hot chamber (3), including in its lower portion at least one pumping orifice (5), this second chamber (3) having a common partition with a heating body (6) such as a degassing chamber (6), so as to ensure heating of the liquid contained in said second chamber (3), this second chamber (3) communicating with said first chamber (2) through at least one communication orifice (7) made in said separative partition (3A, 3B) in order to allow filling of said second chamber (3) from said first chamber (2),
**characterized in that** the pumping orifice (5) of the second chamber (3) extends towards the inside of the second chamber (3) through a column (8) for discharging the contents of said second chamber (3), said column (8) being fed with liquid via at least one aperture (10), a so-called high aperture, away from the base of the column (8).

2. The tank (1) according to claim 1, **characterized in that** the discharge column (8) includes an additional aperture (9) for feeding liquid to said discharge column (8), a so-called low aperture, said low aperture being located at a lower level of said high aperture and, preferably at the base of said column (8), or in the vicinity thereof.

3. The tank (1) according to one of claims 1 to 2, **characterized in that** the additional feed aperture (9) is located on the column opposite to the communication orifice (7) with respect to the pumping orifice (5).

4. The tank (1) according to one of claims 1 to 3, **characterized in that** the second chamber (3) is equipped with means for deflecting the liquid stemming from the communication orifice (7), positioned between said communication orifice (7) and the additional feed aperture (9).

5. The tank (1) according to one of claims 1 to 4, **characterized in that** it is formed by assembling at least two molded parts (1A, 1B), the column (8) having been molded together with the part (1A), including the pumping orifice (5).

6. The tank (1) according to one of claims 1 to 5, **characterized in that** said high aperture is made at the top of the column (8) or in the vicinity thereof.

7. The tank (1) according to one of claims 1 to 4, **characterized in that** it is formed by assembling at least two molded parts (1A, 1B), the column (8) being formed with two portions to be connected, one of the portions of the column (8) having been molded together with the part (1A) including the pumping orifice (5) and the other portion having been molded together with the part (1B), said high aperture of the column (8) being made in the connection area of both portions forming the column (8).

8. The tank (1) according to one of claims 1 to 7, of the type formed by assembling at least two molded parts (1A, 1B), **characterized in that** the heating body (6) is a degassing box integrated with the tank (1), said degassing box being formed with one or more portions molded together with the constitutive portions (1A, 1B) of the tank (6).

9. The tank (1) according to one of claims 1 to 8, **characterized in that** the diameter of the discharge column (8) is equal to or greater than the diameter of the pumping orifice (5), and **in that** the height of said discharge column (8) is preferably comprised between 15 and 80 mm.

10. The tank (1) according to one of claims 1 to 9, **characterized in that** the diameter of the discharge column (8) is comprised between 15 and 30 mm.

## Patentansprüche

1. Behälter (1) für Waschflüssigkeit, insbesondere für Scheiben oder Scheinwerfer, für ein Kraftfahrzeug, wobei der Behälter (1) mit mindestens einer Zwischenwand (3A, 3B) ausgestattet ist, die mindestens teilweise eine erste, sogenannte kalte Kammer (2) abtrennt, die in ihrem oberen Abschnitt mindestens eine Öffnung zum Einfüllen der Flüssigkeit aufweist, und eine zweite, sogenannte warme Kammer (3), die in ihrem unteren Abschnitt mindestens eine Pumpöffnung (5) aufweist, wobei diese zweite Kammer (3) eine gemeinsame Zwischenwand mit einem Heizkörper (6) aufweist, wie zum Beispiel eine Entlüftungskammer (6), derart, dass das Beheizen der in der zweiten Kammer (3) enthaltenen Flüssigkeit gewährleistet ist, wobei diese zweite Kammer (3) mit der ersten Kammer (2) über mindestens eine in die trennende Zwischenwand (3A, 3B) eingearbeitete Kommunikationsöffnung (7) kommuniziert (7), um das Befüllen der zweiten Kammer (3) ab der ersten Kammer (2) zu erlauben,
**dadurch gekennzeichnet, dass** sich die Pumpöffnung (5) der zweiten Kammer (3) in Richtung Innenraum der zweiten Kammer (3) durch eine Säule (8) zum Ablassen des Inhalts der zweiten Kammer (3) verlängert, wobei die Säule (8) über mindestens eine sogenannte obere, von der Basis der Säule (8) entfernte Öffnung (10) mit Flüssigkeit versorgt wird.

2. Behälter (1) nach Anspruch 1, **dadurch gekennzeichnet, dass** die Ablasssäule (8) eine zusätzliche sogenannte untere Flüssigkeitsversorgungsöffnung (9) der Ablasssäule (8) aufweist, wobei sich die untere Öffnung auf einer Ebene unterhalb der oberen Öffnung befindet und vorzugsweise an der Basis der Säule (8) oder in ihrer Nähe.

3. Behälter (1) nach einem der Ansprüche 1 bis 2, **dadurch gekennzeichnet, dass** sich die zusätzliche Versorgungsöffnung (9) auf der Säule gegenüber der Kommunikationsöffnung (7) im Verhältnis zur Pumpöffnung (5) befindet.

4. Behälter (1) nach einem der Ansprüche 1 bis 3, **dadurch gekennzeichnet, dass** die zweite Kammer (3) mit Mitteln zur Ablenkung der Flüssigkeit aus der Kommunikationsöffnung (7) ausgestattet ist, die zwischen der Kommunikationsöffnung (7) und der zusätzlichen Versorgungsöffnung (9) angeordnet sind.

5. Behälter (1) nach einem der Ansprüche 1 bis 4, **dadurch gekennzeichnet, dass** er durch Montage von mindestens zwei Formteilen (1A, 1B) gebildet ist, wobei die Säule (8) mit dem Teil (1A), das die Pumpöffnung (5) aufweist, geformt wird.

6. Behälter (1) nach einem der Ansprüche 1 bis 5, **dadurch gekennzeichnet, dass** die obere Öffnung an der Spitze der Säule (8) oder in deren Nähe eingearbeitet ist.

7. Behälter (1) nach einem der Ansprüche 1 bis 4, **dadurch gekennzeichnet, dass** er durch Montage von mindestens zwei Formteilen (1A, 1B) gebildet ist, wobei die Säule (8) von zwei zu verbindenden Abschnitten gebildet wird, wobei einer der Abschnitte der Säule (8) mit dem Teil (1A), das die Pumpöffnung (5) aufweist, geformt wird, und der andere Abschnitt mit dem anderen Teil (1B) geformt wird, wobei die obere Öffnung der Säule (8) in den Verbindungsbereich der zwei Abschnitte, die die Säule (8) bilden, eingearbeitet ist.

8. Behälter (1) nach einem der Ansprüche 1 bis 7 der Bauart, die durch Montage von mindestens zwei Formteilen (1A, 1B) gebildet wird, **dadurch gekennzeichnet, dass** der Heizkörper (6) ein in den Behälter (1) integrierter Entlüftungsbehälter ist, wobei der Entlüftungsbehälter aus einem oder mehreren Formabschnitten mit den Teilen (1A, 1B) gebildet wird, aus denen der Behälter (6) besteht.

9. Behälter (1) nach einem der Ansprüche 1 bis 8, **dadurch gekennzeichnet, dass** der Durchmesser der Ablasssäule (8) gleich dem oder größer ist als der Durchmesser der Pumpöffnung (5) und dass die Höhe der Ablasssäule (8) vorzugsweise zwischen 15 und 80 mm inklusive ist.

10. Behälter (1) nach einem der Ansprüche 1 bis 9, **dadurch gekennzeichnet, dass** der Durchmesser der Ablasssäule (8) zwischen 15 und 30 mm inklusive ist.
